Europäisches Patentamt

European Patent Office

Office européen des brevets

(19)

(11) Veröffentlichungsnummer: **0 169 322**
**B1**

(12) **EUROPÄISCHE PATENTSCHRIFT**

(45) Veröffentlichungstag der Patentschrift: **27.06.90**

(21) Anmeldenummer: **85105891.7**

(22) Anmeldetag: **14.05.85**

(51) Int. Cl.⁵: **B 29 C 45/26**, B 29 C 31/04, B 29 C 33/00 // B29K105:04, B29L31:14, B29L31:30

(54) **Verfahren und Formwerkzeug zum Herstellen von Formteilen mit grill-, gitter- oder rostartigen Bereichen, wie KFZ-Soft-faces, Spoiler, Bumper, aus einer fliessfähigen Masse.**

(30) Priorität: **26.05.84 DE 3419824**

(43) Veröffentlichungstag der Anmeldung: **29.01.86 Patentblatt 86/05**

(45) Bekanntmachung des Hinweises auf die Patenterteilung: **27.06.90 Patentblatt 90/26**

(84) Benannte Vertragsstaaten: **DE FR GB IT**

(56) Entgegenhaltungen: **DE-A-3 208 610** **GB-A-1 358 017** **GB-A-1 429 311**

(73) Patentinhaber: **BAYER AG** **D-5090 Leverkusen 1 Bayerwerk (DE)**

(72) Erfinder: **Müller, Heinz** **Buchenweg 16** **D-5090 Leverkusen (DE)** Erfinder: **Schulte, Klaus, Dipl.-Ing.** **Kurt-Schumacher-Ring 91b** **D-5090 Leverkusen (DE)** Erfinder: **Klier, Lothar, Dipl.-Ing.** **Brucher Weg 24** **D-5653 Leichlingen (DE)**

EP 0 169 322 B1

## Beschreibung

Die Erfindung betrifft ein Verfahren und ein Formwerkzeug zum Herstellen von Formteilen mit grill-, gitter- oder rostartigen Bereichen, wobei eine fließfähige Masse in einen dem Formteil entsprechenden Formhohlraum eines Formwerkzeuges eingebracht wird, wobei im Formhohlraum in den dem Formteil entsprechenden, besagten grill-, gitter- oder rostartigen Bereichen die Zonen vorgesehener Durchbrüche zunächst von der Masse überströmt werden und die Masse erst im weiteren Verlauf bzw. nach Ende des Füllvorganges aus diesen Zonen verdrängt wird.

Um den Formzeitzyklus zu verringern, geht man heute zu immer schneller aushärtenden Systemen über, wie sie insbesondere mit Polyurethan-Reaktionsgemischen möglich sind. So müssen beispielsweise bei der Herstellung von Außenteilen für Kraftfahrzeuge, wie Soft-Faces, Front- oder Heckspoiler, Bumper, die Formwerkzeughohlräume in weniger als zwei Sekunden gefüllt sein. Diese Tatsache führte zu der Regel, einen Grillbereich stets längs der Rippen durchströmen zu lassen. Hierbei werden jedoch die Fließwege aufgrund des asymmetrisch angeordneten Angusses unzumutbar lang und die Dichteverteilung im Formteil unterschiedlich. Bei einer symmetrischen Anordnung des Angusses sind Lufteinschlüsse wegen der dabei auftretenden Zusammenflüsse unvermeidbar. Aber auch bei Spritzgießverfahren mit üblichen Thermoplasten treten beim Füllen der Formwerkzeughohlräume wegen der immer komplizierter geformten Formteile Schwierigkeiten in Form von Lufteinschlüssen als Folge von Zusammenflüssen auf.

Es besteht also die Aufgabe, ein Verfahren und ein Formwerkzeug der eingangs genannten Art zu finden, wobei bei der Herstellung der besagten Formteile Lufteinschlüsse vermieden werden.

Gemäß dem neuen Verfahren geschieht dies dadurch, daß beim Füllen die Hauptfließrichtung der Masse quer zur Hauptrichtung der grill-, gitter- oder rostartigen Bereiche gewählt wird und daß beim Verdrängen der Masse die Fließfrontgeschwindigkeit so niedrig gewählt wird, daß die im Formhohlraum enthaltene Luft restlos entweichen kann.

Auf diese Weise wird eine mit relativ langsamer Geschwindigkeit vorrückende Fließfront erzielt, welche in sich geschlossen ist, so daß keine Lufteinschlüsse möglich sind. Erst gegen Ende des Füllvorganges wird die Masse aus den Zonen vorgesehener Durchbrüche verdrängt. Es versteht sich, daß dabei die Verdrängungsgeschwindigkeit derart zu wählen ist, daß beim Verdrängen der Masse deren Fließfront so langsam fortschreitet, daß ein vollständiges Ausfüllen des Formhohlraumes ohne Lufteinschlüsse möglich ist.

Aus GB-A-1 429 311 ist ein Verfahren bekannt, mit welchem eine Öffnung aufweisende Artikel, insbesondere Schallplatten, durch Spritzgießen bzw. Gießen herstellbar sind, indem korrespondierende lochformende Elemente gegeneinander gepreßt werden, und zwar in einer Position innerhalb der Dicke des Artikels. Um einen etwaigen Film, welcher sich gebildet hat, abzutrennen, fährt dann eines dieser Elemente über diese Position hinaus.

Vorzugsweise wird bei dem neuen Verfahren der Strom der Masse im Formhohlraum durch Leitelemente in die den tiefsten Stellen der Rippen entsprechenden Ausnehmungen gerichtet. Auf diese Weise wird der Fließweg gesteuert. Die Leitelemente in Form von Lippen oder Wülsten dienen dabei gleichzeitig der Bestimmung der Wandstärke der Rippen.

Das neue Formwerkzeug zum Herstellen von Formteilen mit grill-, gitter- oder rostartigen Bereichen geht aus von einem dem herzustellenden Formteil entsprechenden Formhohlraum mit zugeordnetem Anguß, wobei die beiden Formwerkzeughälften in jenen Zonen der besagten Bereiche, in denen das Formteil Durchbrüche besitzen soll, Kontaktflächen aufweisen und in einer der Formwerkzeughälften mindestens ein Teil dieser Kontaktflächen auf einem in Richtung auf die korrespondierenden Kontaktflächen der anderen Formwerkzeughälfte bewegbaren Stempel angeordnet sind, und wobei dieser Stempel zu Beginn des Formfüllvorganges eine zurückgezogene Stellung einnimmt, in welcher die Kontaktflächen Abstand voneinander haben, und später eine Stellung einnimmt, in welcher die Kontaktflächen aufeinanderliegen.

Das Neue ist darin zu sehen, daß der Anguß quer zur Hauptrichtung der Durchbrüche angeordnet ist.

Diese Ausgestaltung erlaubt, daß die Materialströme nicht durch die engen Ausnehmungen der Querverbindungen mit hoher Geschwindigkeit hindurchschießen müssen, sondern daß die Kontaktflächen zwischen den Ausnehmungen überflutet werden können, wodurch eine weitaus niedrigere Fließgeschwindigkeit erzielt wird und Zusammenflüsse vermieden werden. Die im Formhohlraum enthaltene Luft kann problemlos entweichen. Der Stempel läßt sich vorzugsweise durch einen doppelseitig beaufschlagbaren Kolben hydraulisch betätigen. Er kann aber auch pneumatisch oder mechanisch betätigbar sein. Gegebenenfalls ist seine Hubhöhe durch einen verstellbaren Anschlag einstellbar. Vorzugsweise ist die Vorschubgeschwindigkeit des Stempels steuerbar, gegebenenfalls nach einem vorgegebenen Programm, damit beim Verdrängen der Masse aus den Zonen zwischen den Kontaktflächen in den restlichen Formhohlraum nicht zu hohe Fließgeschwindigkeiten entstehen.

Nach einer besonderen Ausführungsform sind zwischen den Kontaktflächen des Stempels Leitelemente vorgesehen, welche in die den Rippen des Formteils entsprechenden, in der anderen Formwerkzeughälfte angeordneten Ausnehmungen hineinragen.

Durch derartige Leitelemente in Form von Lippen oder Wülsten wird auf die Strömungsrichtung Einfluß genommen, wobei diese Leitelemente gleichzeitig die Form und Wandstärke der besagten Rippen des Formteils festlegen.

Ein neues Formwerkzeug für die Herstellung eines Soft-face mit Grillbereich ist in der Zeichnung als Beispiel rein schematisch dargestellt und nachstehend näher erläutert.

Es zeigen:

Fig. 1 den Abriß eines Querschnittes durch das geschlossene Formwerkzeug mit dem Stempel in Füllstellung,

Fig. 2 den Abriß des Formwerkzeugs gemäß Fig. 1, jedoch mit dem Stempel in Endstellung gegen Ende des Formfüllvorganges und

Fig. 3 eine Draufsicht auf die untere Formwerkzeughälfte.

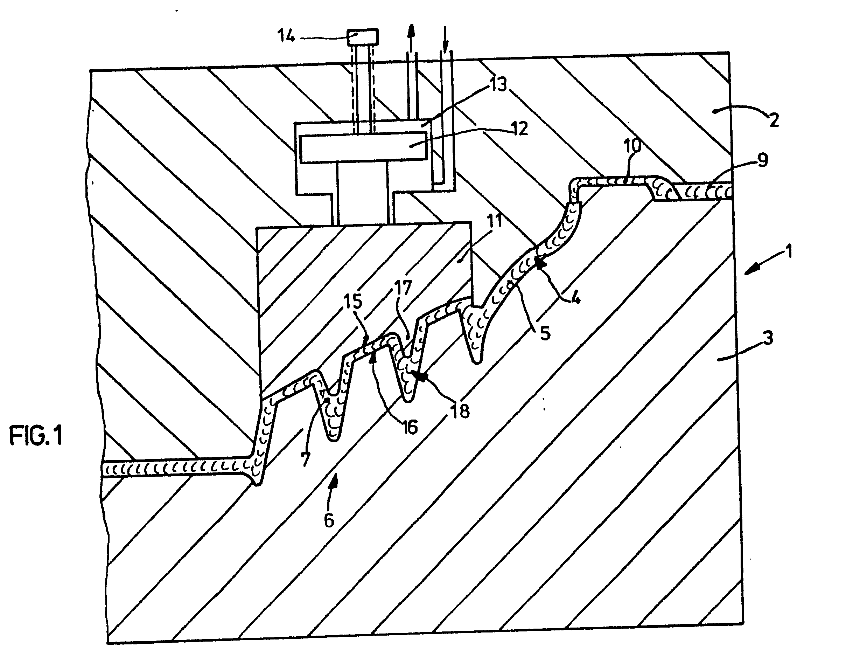

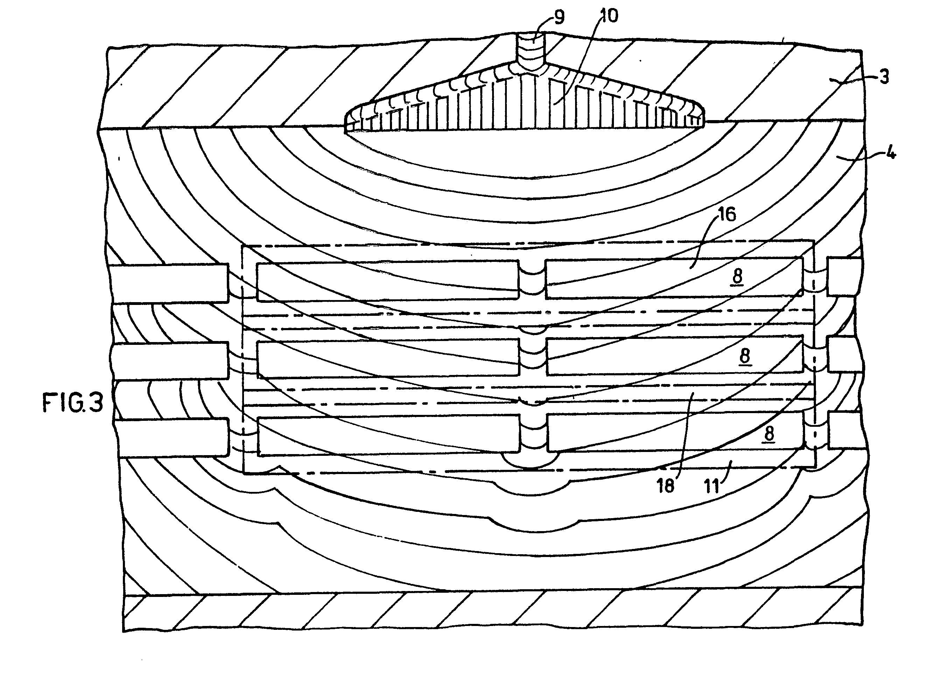

Das Formwerkzeug 1 besteht aus einer oberen Formwerkzeughälfte 2 und einer unteren Formwerkzeughälfte 3. Die beiden Formwerkzeughälften 2, 3 schließen zwischen sich einen Formhohlraum 4 ein, welcher als Negativ einem Soft-face 5 für ein Kraftfahrzeug entspricht. Dieses Soft-face 5 besitzt einen Grillbereich 6, in welchem zwischen Rippen 7 Durchbrüche 8 angeordnet sind. Ein Angußkanal 9 erweitert sich zu einem in den Formhohlraum 4 mündenden Filmanguß 10. In der oberen Formwerkzeughälfte 2 ist ein zur unteren Formwerkzeughälfte 3 hin bewegbarer Stempel 11 angeordnet (in Fig. 3 ist seine Kontur als strichpunktierte Linie angedeutet), welche mittels eines doppelseitig hydraulisch beaufschlagbaren Kolbens 12 betätigbar ist. Dieser Kolben 12 ist in einer Hydraulikkammer 13 geführt. Eine einstellbare Anschlagschraube 14 dient der Einstellung der gewünschten Hubhöhe. Die Stirnfläche des Stempels 11 weist Kontaktflächen 15 auf, welche mit Kontaktflächen 16 der Formwerkzeughälfte 3 korrespondieren. Zwischen den einzelnen Kontaktflächen 15 sind Leitelemente 17 in Form von Lippen angeordnet (in Fig. 3 durch strichpunktierte Linien angedeutet). Zwischen den Kontaktflächen 16 sind Ausnehmungen 18 vorhanden, welche den Rippen 7 als Negativ entsprechen. Die Leitelemente 17 weisen in die Ausnehmungen 18 hinein und bestimmen die Wandstärke der Rippen 7, wenn sich der Stempel 11 in seiner Endstellung befindet. Im zurückgezogenen Zustand des Stempels 11 strömt die Masse zwischen den Kontaktflächen 15 und 16 hindurch (Fig. I) und füllt dabei die Ausnehmungen 18. Bei fortgeschrittenem Füllvorgang wird der Stempel 11 unter Verdrängung der dazwischen befindlichen Masse herabgefahren, so daß die Kontaktflächen 15, 16 gegeneinander gepreßt werden, wodurch die Durchbrüche 8 entstehen. Die in den Fig. 1 und 3 angedeuteten Fließfrontlinien sollen die Verteilung des Reaktionsgemisches, ausgehend vom Filmanguß 10, verdeutlichen.

Beispiel

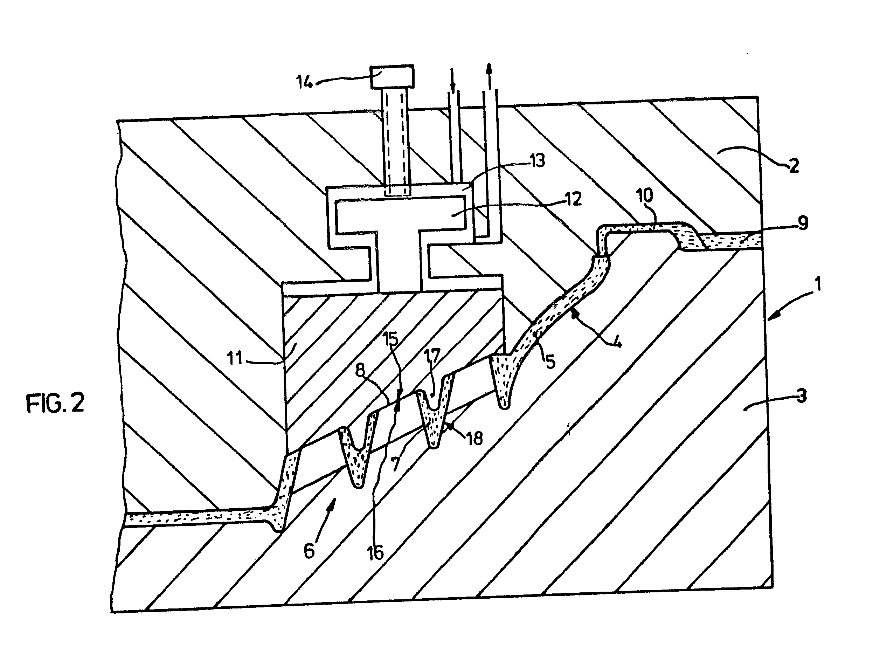

Verwendet wird das Formwerkzeug 1 gemäß Fig. 1 bis 3. Ein halbharten Polyurethanschaumstoff bildendes Reaktionsgemisch wird in den Formhohlraum 4, welcher ein Volumen von 4000 cm³ besitzt, eingebracht. Die Füllzeit beträgt 2, 5 Sekunden. Zu Beginn des Formfüllvorganges ist der Stempel 11 zurückgefahren und das Reaktionsgemisch überströmt die Kontaktfläche 16 und umströmt dabei die Leitelemente 17. Nach 2, 5 Sekunden, d.h., nachdem das insgesamt benötigte Reaktionsgemisch eingetragen worden ist, wird die Gemischzufuhr unterbrochen und der Stempel 11 preßt sich gegen die untere Formwerkzeughälfte 3. Das verdrängte Reaktionsgemisch füllt nun den restlichen, bisher frei gebliebenen Teil des Formhohlraumes 4 aus. Nach einer Aushärtungszeit von 60 Sekunden kann das Formwerkzeug 1 geöffnet und das Formteil 5 entnommen werden. Das Formwerkzeug 1 wird dann wieder geschlossen, der Stempel 11 zurückgefahren und ein neuer Formfüllvorgang kann eingeleitet werden. Alternativ wird der Stempel 11 noch während der Gemischzufuhr nach 2, 3 Sekunden gegen die untere Formwerkzeughälfte 3 gepreßt.

**Patentansprüche**

1. Verfahren zum Herstellen von Formteilen (5) mit grill-, gitter- oder rostartigen Bereichen, wobei eine fließfähige Masse in einen dem Formteil (5) entsprechenden Formhohlraum (4) eines Formwerkzeuges (1) eingebracht wird, wobei im Formhohlraum (4) in den dem Formteil (5) entsprechenden, besagten grill-, gitter- oder rostartigen Bereichen (6) die Zonen vorgesehener Durchbrüche (8) zunächst von der Masse überströmt werden und die Masse erst im weiteren Verlauf bzw. nach Ende des Füllvorganges aus diesen Zonen verdrängt wird, dadurch gekennzeichnet, daß beim Füllen die Hauptfließrichtung der Masse quer zur Hauptrichtung der grill-, gitter- oder rostartigen Bereiche (6) gewählt wird und daß beim Verdrängen der Masse die Fließfrontgeschwindigkeit so niedrig gewählt wird, daß die im Formhohlraum (4) enthaltene Luft restlos entweichen kann.

2. Verfahren nach Anspruch 1, dadurch gekennzeichnet, daß der Strom der Masse im Formhohlraum (4) durch Leitelemente (17) in die den tiefsten Stellen der Rippen (7) entsprechenden Ausnehmungen (18) gerichtet wird.

3. Formwerkzeug (1) zum Herstellen von Formteilen (5) mit grill-, gitter- oder rostartigen Bereichen (6) mit einem dem herzustellenden Formteil (5) entsprechenden Formhohlraum (4) mit zugeordnetem Anguß (10), wobei die beiden Formwerkzeughälften (2, 3) in jenen Zonen der besagten Bereiche (6), in denen das Formteil (5) Durchbrüche (8) besitzen soll, Kontaktflächen (15, 16) aufweisen und in einer der Formwerkzeughälften (2) mindestens ein Teil dieser Kontaktflächen (15) auf einem in Richtung auf die korrespondierenden Kontaktflächen (16) der anderen Formwerkzeughälfte (3) bewegbaren Stempel (11) angeordnet sind, und wobei dieser Stempel (11) zu Beginn des Formfüllvorganges eine zurückgezogene Stellung einnimmt, in welcher die Kontaktflächen (15, 16) Abstand voneinander haben, und später eine Stellung einnimmt, in welcher die Kontaktflächen (15, 16) aufeinanderliegen, dadurch gekennzeichnet, daß der Anguß (10) quer zur Hauptrichtung der Durchbrüche (8) angeordnet ist.

4. Formwerkzeug nach Anspruch 3, dadurch gekennzeichnet, daß zwischen den Kontaktflächen (15) des Stempels (11) Leitelemente (17) vorgesehen sind, welche in die den Rippen (7) des Formteils (5) entsprechenden, in der anderen Formwerkzeughälfte (3) angeordneten Ausnehmungen (18) weisen.

**Revendications**

1. Procédé de fabrication de pièces moulées (5) présentant des régions en grille ou treillis, une pâte fluide étant introduite dans une cavité de moulage (4), correspondant à la pièce moulée (5), d'un outil de moulage (1), la pâte recouvrant en un premier temps les zones d'ajours (8) prévues dans les régions (6) en grille ou treillis correspondant à la pièce moulée (5), dans la cavité de moulage (4), et la pâte n'étant chassée de ces zones qu'au cours de l'opération suivante ou à la fin de l'opération de remplissage, caractérisé en ce que pendant le remplissage, on choisit comme direction principale d'écoulement de la pâte, la direction perpendiculaire à la direction principale des régions (6) en grille ou treillis, et en ce que pour chasser la pâte, on choisit une vitesse de front d'écoulement suffisamment basse pour que l'air contenu dans la cavité de moulage (4) puisse totalement s'échapper.

2. Procédé selon la revendication 1, caractérisé en ce que le courant de pâte dans la cavité de moulage (4) est dirigé par des déflecteurs (17) dans les évidements (18) correspondant aux points les plus bas des nervures (7).

3. Outil de moulage (1) pour la fabrication de pièces moulées (5) présentant des régions (6) en grille ou treillis, comportant une cavité de moulage (4) correspondant à la pièce moulée (5) à fabriquer avec son entrée (10) les deux moitiés d'outil de moulage (2, 3) présentant des surfaces de contact (15, 16) dans les zones desdites régions (6) dans lesquelles la pièce moulée (5) doit présenter des ajours (8), et au moins une partie de ces surfaces de contact (15) de l'une des moitiés d'outil de moulage (2) étant disposée. sur un poinçon (11) mobile dans la direction des surfaces de contact (16) correspondantes de l'autre moitié d'outil de moulage (3), et ce poinçon (11) occupant, au début de l'opération de remplissage, une position retirée dans laquelle les surfaces de contact (15, 16) sont écartées les unes des autres, et ultérieurement une position dans laquelle les surfaces de contact (15, 16) sont appliquées les unes sur les autres, caractérisé en ce que l'entrée (10) est perpendiculaire à la direction principale des ajours (8).

4. Outil de moulage selon la revendication 3, caractérisé en ce qu'on prévoit, entre les surfaces de contact (15) du poinçon (11), des déflecteurs (17) qui sont tournés vers les évidements (18) correspondant aux nervures (7) de la pièce moulée (5), disposés dans l'autre moitié d'outil de moulage (3).

**Claims**

1. A process for the production of mouldings (5) having grille-like, grid-like or grate-like regions, a flowable paste being introduced into a mould cavity (4) of a mould (1) corresponding to the moulding (5), the paste initially flowing over the zones of predetermined openings (8) in the mould cavity (4) in the said grille-like, grid-like or grate-like regions (6) corresponding to the moulding (5) and the paste only being displaced from those zones in the further course of or at the end of the filling process, characterized in that the main flow direction of the paste during filling is transversely of the main direction of the grille-like, grid-like or grate-like regions (6) and in that the speed of the flow front during displacement of the paste is so low that the air in the mould cavity (4) can completely escape.

2. A process as claimed in claim 1, characterized in that the flow of the paste in the mould cavity (4) is directed by guide elements (17) into the recesses (18) corresponding to the lowest points of the ribs (7).

3. A mould (1) for the production of mouldings (5) having grille-like, grid-like or grate-like regions (6) with a mould cavity (4) and an associated gate (10) corresponding to the moulding (5) to be produced, the two mould halves (2, 3) having contact surfaces (15, 16) in those zones of the regions (6) in which the moulding (5) is intended to have openings (8) and the contact surfaces (15) being at least partly arranged on a mould core (11) displaceable towards the corresponding contact surfaces (16) of the other mould half (3) in one of the mould halves (2) and the core (11) at the beginning of the filling process assuming a withdrawn position in which the contact surfaces (15, 16) are spaced apart from one another, characterized in that the gate (10) is arranged transversely of the main direction of the openings (8).

4. A mould as claimed in claim 3, characterized in that guide elements are provided between the contact surfaces (15) of the mould core (11), pointing into the recesses (18) corresponding to the ribs (7) of the moulding (5) in the other half (3) of the mould.

FIG.1

FIG. 2

FIG.3

EP 0 169 322 B1